# EUROPEAN PATENT APPLICATION

(11) **EP 3 404 402 A1**
(43) Date of publication of application: **21.11.2018**
(21) Application number: 18168120.6
(22) Date of filing: 19.04.2018
(51) Int. Cl.: G01N 21/64, B23K 9/16

(54) **A METHOD OF DETERMINING THE RESIDUAL OXYGEN CONTENT IN A SHIELDED ARC WELDING PROCESS USING PRESSURE SENSITIVE PAINT**

(30) Priority: 11.05.2017 GB 201707546
(71) Applicant: Rolls-Royce plc, London SW1E 6AT (GB)
(72) Inventor: Grafton-Reed, Clive, Derby, Derbyshire DE24 8BJ (GB)
(74) Representative: Rolls-Royce plc

(57) **Abstract**

A method of determining a residual oxygen level in a shielded arc welding process comprising the steps of:
providing a surface;
positioning a gas shield over a portion of the surface;
applying a pressure sensitive paint to the portion of the surface;
flowing oxygen through the gas shield onto the portion of the surface;
illuminating the portion of the surface;
measuring a first fluorescent emission from the portion of the surface while oxygen is flowing through the gas shield;
determining an oxygen saturation level across the portion of the surface in dependence on the magnitude of the first fluorescent emission;
flowing a shield gas through the gas shield;
illuminating the portion of the surface;
measuring a second fluorescent emission from the portion of the surface while the shield gas is flowing through the gas shield; and
determining an oxygen level across the portion of the surface in dependence on the relative magnitudes of the first fluorescent emission and the second fluorescent emission.

## Description

### Field of the Disclosure

The present disclosure relates to a method of determining an oxygen level inside a gas shield and particularly, but not exclusively, to a method of determining an oxygen level inside a gas shield used for a shielded arc welding process.

### Background to the Disclosure

When setting up gas shields for the shielded arc welding of components in which the weld region has a complex geometry it is known to use a gas sensor to measure the oxygen level at points along the proposed weld line. An example of such sensor is that produced by MOCON® ¹.
¹ MOCON® was previously known as DANSensor®.

This prior art sensor provides a point reading of the oxygen level, typically in parts per million (ppm). Generally the lowest possible value for the oxygen level within the gas shield is desirable. Notwithstanding this desirable criterion, there are different maximum acceptable oxygen levels for the welding of different materials. For example, for the shielded arc welding of titanium an acceptable value for the oxygen level within the gas shield would be less than 50ppm. It is known that an effective gas shield can achieve better an oxygen level within the shield of less than 10ppm.

A known problem with the use of probe type gas sensors (such as the DAN® sensor probe) for measuring the oxygen level within the gas shield is that it is an invasive measurement. The measuring probe is several millimetres in diameter, and so will disturb the shield gas flow in the area where the measurement is made. This disturbance may provide a user with a false reading for the oxygen level within the gas shield. Consequently, the positioning of the measuring probe as it passes through the shield and also the positioning of the entry to the probe within the shield is critical to an accurate and representative measurement of the oxygen level within the gas shield.

The very nature of probe measurement for determining an oxygen level within the gas shield means that only a series of point measurements of oxygen level can be made. Whilst the gas sensor element itself is capable of measuring an oxygen level to a few parts per million (ppm), a probe measurement technique cannot provide a measure of the oxygen level within the gas shield over the whole area enclosed by the gas shield.

Furthermore, a skilled operator is needed to get good readings from a probe measurement arrangement. This is particularly the case for complex weld geometries where there may be several gas feeds interacting to form the gas shield. For example, if the measuring probe itself is exposed to direct gas flow the cooling effect of the gas flow may cause the sensor to over cool and drop out of calibration.

If the shield gas flow rate is adjusted then the need to repeat multiple probe measurements is time consuming.

### Statements of Disclosure

According to a first aspect of the present disclosure there is provided a method of determining an oxygen level inside a gas shield, the method comprising the steps of:
providing a surface;
positioning a gas shield over a portion of the surface;
applying a pressure sensitive paint to the portion of the surface;
flowing oxygen through the gas shield onto the portion of the surface;
illuminating the portion of the surface;
measuring a first fluorescent emission from the portion of the surface while oxygen is flowing through the gas shield;
determining an oxygen saturation level across the portion of the surface in dependence on the magnitude of the first fluorescent emission;
flowing a shield gas through the gas shield;
illuminating the portion of the surface;
measuring a second fluorescent emission from the portion of the surface while the shield gas is flowing through the gas shield; and
determining a residual oxygen level across the portion of the surface in dependence on the relative magnitudes of the first fluorescent emission and the second fluorescent emission.

Pressure sensitive paints fluoresce when exposed to radiation of a specific wavelength in the presence of oxygen, typically from diodes or a low power laser, and give a fluorescent output of a different wavelength which may captured on a camera.

By applying the pressure sensitive paint over the portion of the surface that is enclosed by the gas shield, it becomes possible to determine the oxygen content over this portion of the surface. This provides a user with a more accurate and informative picture of the oxygen content within the gas shield than the point-wise sensing prior art techniques.

The method of the disclosure allows a user to monitor the effectiveness of the gas shield while adjusting the flow rate(s) of the shield gas(es) without the need to either have multiple sensors or to reposition the sensors within the shielded area. Being able to more effectively optimise the shield gas flows will reduce production costs. Likewise the development times for new gas shield arrangements may be reduced, thus saving costs. This makes the method of the disclosure more time effective and hence cheaper than prior art techniques.

Optionally, the gas shield is an inert gas shield.

In one arrangement the gas shield uses an inert gas, such as helium, neon or argon, to form an inert gas shield over at least a portion of the surface. Such a gas shield has application in shielded gas welding processes.

Optionally, the step of illuminating the portion of the surface comprises the use of a radiation source selected from the group consisting of light emitting diodes, laser diodes and semiconductor lasers.

Pressure sensitive paints contain oxygen sensitive fluorescent molecules held within an oxygen permeable binder material. The fluorescent molecules absorb photons of a certain wavelength, which raises their excitation state. The molecules then return to their original state by emitting photons of a longer wavelength.

The level of absorption of photons by the fluorescent molecules is highly dependent upon the local concentration of oxygen. In other words, when the local oxygen concretion is high, the level of emitted photons produced by the fluorescent molecules will be significantly higher than for low or zero concentrations of oxygen.

Optionally, the steps of illuminating the portion of the surface, comprise the step of:
illuminating the portion of the surface with radiation having a wavelength of between 300 nm and 500 nm.;

In one arrangement, the portion of the surface is illuminated by an array of light emitting diodes producing radiation having a wavelength of 405 ± 10 nm.

Optionally, the steps of measuring the fluorescent emission from the portion of the surface, comprise the step of:
measuring the fluorescent emission from the portion of the surface using an infrared camera.

In one arrangement, the fluorescent emission is captured through a long-pass filter onto a CCD camera.

Optionally, the radiation source is integrated with the infrared camera.

Integrating the radiation source with the camera makes the steps of illuminating the portion of the surface, and the measurement of the fluorescent emissions simpler and quicker for a user. This makes the method of the present disclosure more convenient for the user.

According to a second aspect of the present disclosure there is provided a computer program that, when read by a computer, causes performance of the method according to the first aspect.

According to a third aspect of the present disclosure there is provided a non-transitory computer readable storage medium comprising computer readable instructions that, when read by a computer, cause performance of the method according to the first aspect.

According to a second aspect of the present disclosure there is provided a signal comprising computer readable instructions that, when read by a computer, cause performance of the method according to the first aspect.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic view of a gas shield for a shielded arc welding apparatus that may be operated in accordance with the method of the present disclosure; and
Figure 2 shows a flow chart of the method of the present disclosure.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

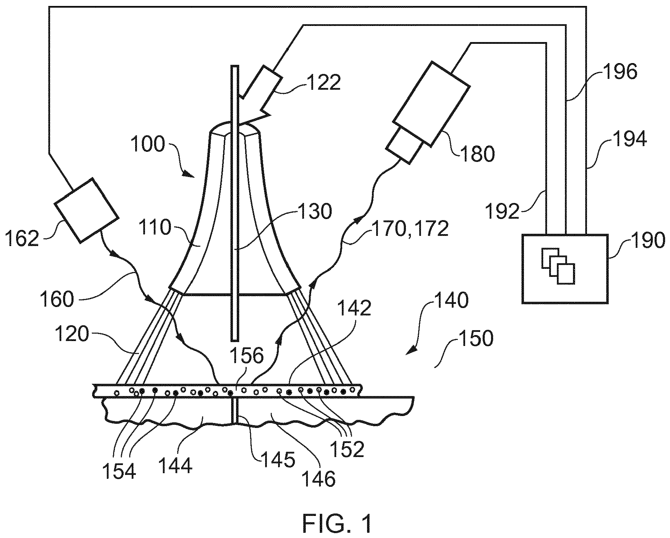

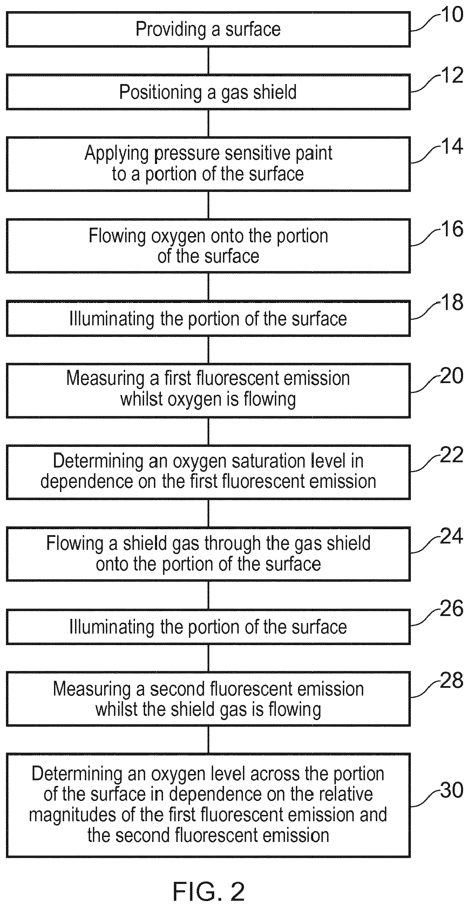

Referring to Figures 1 and 2, a gas shield apparatus for a shielded arc welding process that may be operated in accordance with the method of the present disclosure is designated generally by the reference numeral 100. The gas shield apparatus 100 is described with particular reference to a shielded arc welding operation. However it is to be understood that the method of the present disclosure is applicable to any application or process requiring a gas shield.

The gas shield apparatus 100 comprises a duct 110 that is positioned over a portion 142 of a surface 140. In this arrangement the surface 140 comprises a first component 144 and a second component 146 that are to be welded to one another. The portion 142 of the surface 140 bridges the first and second components 144,146.

The duct 110 provides an annular gas flow 120 in a generally frusto-conical flow pattern that is directed onto the portion 142 of the surface 140. The area of the surface 140 onto which the gas flow 120 impinges defines the area of the portion 142.

A controllable flow of a gas 122 is directed into the duct 110 and provides the annular gas flow 120.

A pressure sensitive paint 150 is applied to the portion 142 of the surface 140. The pressure sensitive paint 150 comprises oxygen sensitive fluorescent molecules 154 held within an oxygen permeable binder material 156. The binder material 156 provides capacity for oxygen molecules 152 to enter the layer of pressure sensitive paint 150.

An LED array 162 is provided that directs illuminating radiation 160 onto the portion 142 of the surface 140. The LED array 162 generates radiation having a wavelength of approximately 400nm. This incident illuminating radiation 160 causes the oxygen sensitive fluorescent molecules 154 in the pressure sensitive paint 150 to fluoresce in the presence of molecular oxygen 154.

This fluorescent emission 170 from the portion 142 of the surface 140 is detected by a camera 180. The camera 180 is connected to a computer 190 that is arranged to provide a user with a measure of the level of the fluorescent emission 170.

The computer is also in turn operatively connected to the radiation source 162 and to the flow of gas 122 to the shield 100. In other words, the computer can controllably activate the radiation source 162, and can also controllably vary a volumetric flow rate of the flow of gas 122 to the shield 100.

Referring to the flow chart of Figure 2, the method of the present disclosure starts at step 10 with the arrangement of the surface 140 over which the gas shield 100 is to be placed. As outlined above, the present embodiment relates to a joint 145 between a first component 144 and a second component 146 that is to be made by a welding process.

A gas shield assembly 100 is positioned over the joint 145 (step 12), which occupies a portion 142 of the surface 140. The portion 142 of the surface 140 is then coated with a pressure sensitive paint 150 (step 14).

A flow of oxygen 122 through the gas shield duct 110 is then initiated (step 16). An LED illumination source 162 is then actuated (step 18) to direct illuminating radiation 160 onto the portion 142 of the surface 140.

As the flow of oxygen 122 impinges onto the portion 142 of the surface 140, the molecular oxygen 154 activates the oxygen sensitive fluorescent molecules 154 causing a first fluorescent emission 170 from the portion 142 of the surface 140.

This fluorescent emission 170 is captured in part by a CCD camera 180 (step 20) that in turn generates an output signal in dependence on the magnitude of the measured fluorescent emission 170. This output signal provides an oxygen saturation level value (step 22) that is indicative of a maximum achievable oxygen level over the portion 142 of the surface 140.

At this point, the flow of gas 122 is switched from a flow of oxygen to a flow of the shield gas, in this case a flow of argon gas (step 24).

The portion 142 of the surface 140 is once again illuminated (step 26) by the LED illumination source 162. The camera 180 is then used, once more, to measure the magnitude of a second fluorescent emission 172 from the portion 142 of the surface 140. The magnitude of the second fluorescent emission 172 is indicative of the proportion of oxygen present over the portion 142 of the surface 140 in the presence of the flow of shield gas 122.

The camera 180 is operatively connected to a computer 190 by a data and signal connection 192. The magnitudes of both the first and second fluorescent emissions 170 are captured by the computer.

As outlined above, the first fluorescent emission 170 is indicative of a situation in which the portion 142 of the surface 140 is covered with pure oxygen, while the second fluorescent emission 172 is indicative of an operational condition in which a shield gas is flowed over the surface with the intention of eliminating oxygen from the portion 142 of the surface 140.

The computer 190 is therefore able to determine from the relative magnitudes of the first and second fluorescent emissions 170,172, the oxygen level over the portion 142 of the surface 140. The method of the present disclosure enables the oxygen level over the portion 142 of the surface 140 to be determined in an areally continuous fashion over the portion 142 of the surface 140.

This areally continuous set of data for the oxygen level over the portion 142 of the surface 140 provides a user with a quicker, more repeatable and more precise determination of the effectiveness of the gas shield 100 than does the point-wise oxygen concentration level measurement of the prior art.

This use of pressure sensitive paints and the associated equipment could be used for all forms of brazing, soldering and welding where a gas shield is required including but not limited to, manual inert gas welding, tungsten inert gas, laser, diode, focused IR.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A method of determining an oxygen level inside a gas shield, the method comprising the steps of:
providing a surface;
positioning a gas shield over a portion of the surface;
applying a pressure sensitive paint to the portion of the surface;
flowing oxygen through the gas shield onto the portion of the surface;
illuminating the portion of the surface;
measuring a first fluorescent emission from the portion of the surface while oxygen is flowing through the gas shield;
determining an oxygen saturation level across the portion of the surface in dependence on the magnitude of the first fluorescent emission;
flowing a shield gas through the gas shield;
illuminating the portion of the surface;
measuring a second fluorescent emission from the portion of the surface while the shield gas is flowing through the gas shield; and
determining a residual oxygen level across the portion of the surface in dependence on the relative magnitudes of the first fluorescent emission and the second fluorescent emission.

2. The method as claimed in Claim 1, wherein the gas shield is an inert gas shield.

3. The method as claimed in Claim 1 or Claim 2, wherein the step of illuminating the portion of the surface comprises the use of a radiation source selected from the group consisting of light emitting diodes, laser diodes and semiconductor lasers.

4. The method as claimed in any one of Claims 1 to 3, wherein the steps of illuminating the portion of the surface, comprise the step of:
illuminating the portion of the surface with radiation having a wavelength of between 300 nm and 500 nm.;

5. The method as claimed in any one of Claims 1 to 4, wherein the steps of measuring the fluorescent emission from the portion of the surface, comprise the step of:
measuring the fluorescent emission from the portion of the surface using an infrared camera.

6. The method as claimed in Claim 5, wherein the radiation source is integrated with the infrared camera.

7. A computer program that, when read by a computer, causes performance of the method as claimed in any of claims 1 to 6.

8. A non-transitory computer readable storage medium comprising computer readable instructions that, when read by a computer, cause performance of the method as claimed in any of claims 1 to 6.

9. A signal comprising computer readable instructions that, when read by a computer, cause performance of the method as claimed in any of claims 1 to 6.
